Europäisches Patentamt

(19) European Patent Office

Office européen des brevets

(11) Veröffentlichungsnummer: **0 084 650**
**B1**

(12) **EUROPÄISCHE PATENTSCHRIFT**

(45) Veröffentlichungstag der Patentschrift:
**04.12.85**

(51) Int. Cl.⁴: **C 02 F 3/06, C 02 F 3/08**

(21) Anmeldenummer: **82111663.9**

(22) Anmeldetag: **15.12.82**

(54) Tauchkörper für die biologische Abwasserreinigung.

(30) Priorität: **22.01.82 DE 3201848**

(43) Veröffentlichungstag der Anmeldung:
**03.08.83 Patentblatt 83/31**

(45) Bekanntmachung des Hinweises auf die Patenterteilung:
**04.12.85 Patentblatt 85/49**

(84) Benannte Vertragsstaaten:
**AT BE CH DE FR GB IT LI LU NL SE**

(56) Entgegenhaltungen:
**DE - A - 2 914 689**
**DE - A - 2 920 664**
**DE - C - 561 479**

(73) Patentinhaber: **Mecapec S.A., Postfach,
CH-8716 Schmerikon (CH)**

(72) Erfinder: **Dudli, Andreas, Ottenhoferstrasse,
CH-8741 Uetikург (CH)**
Erfinder: **Fuchs, Ernst, Oberseestrasse,
CH-8716 Schmerikon (CH)**
Erfinder: **Schmidt, Peter, Langrütistrasse 63 d,
CH-8635 Oberdürnten (CH)**

(74) Vertreter: **Vièl, Georg, Dipl.-Ing., Am Zimmerplatz 16,
D-6606 Saarbrücken-Gersweiler (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung betrifft einen Tauchtropfkörper für die biologische Abwasserreinigung, mit mindestens einer spiralförmig aufgewickelten Wellplatte (3', 3'', 31, 32), wobei die Wellenprofil-Hohlräume als zur Wellenachse geneigt angeordnete Strömungskanäle für das Abwasser ausgebildet sind.

Ein solcher Tauchtropfkörper ist aus der CH-PS 614 681 bekannt. Diese Konstruktion ermöglicht die Herstellung eines Tauchtropfkörpers mit großer Wirkfläche (bezogen auf das Gesamtkörpervolumen) und von einfachem Aufbau. Die Vollständigkeit der Füllung und die Gleichmäßigkeit der Abwasserströmung in den Kanälen des Tauchtropfkörpers ist jedoch verbesserungsbedürftig.

Aufgabe der Erfindung ist daher die Schaffung eines Tauchtropfkörpers, der sich unter Wahrung der einfachen und robusten Konstruktion mit spiralförmig aufgewickelten Wellplatten zur Strömungskanalbildung durch vollständige Füllung sowie gleichmäßige Durchströmung der Kanäle auszeichnet.

Diese Aufgabe wird dadurch gelöst, daß die Profilwellen der Wellplatte (3', 3'', 31, 32) zur Wickelachse (XX) unter einem vorgegebenen Kreuzungswinkel verlaufen, und daß die Profilwellen in den radial übereinander bzw. axial nebeneinanderliegenden Wickellagen (A, B) bzw. Wellplatten (31, 32) bezüglich der Wickelachse (XX) unter gegensinnig geöffneten Kreuzungswinkeln angeordnet sind.

Die erfindungsgemäße Anordnung der Profilwellen ermöglicht infolge der teilweise in Umfangsrichtung des Wickelkörpers verlaufenden Profilflanken eine wesentliche Verstärkung und Versteifung des Aufbaues sowie gleichzeitig eine vom zuerst eintauchenden Profilende beginnende, gleichmäßige Füllung und Durchströmung der einzelnen Kanäle. Dabei wird die in den Kanälen vor dem Eintauchen vorhandene Luft ohne Stauungen von einem Kanalende zum anderen fortschreitend vom eintretenden Abwasser verdrängt. Ferner kann gemäß der Erfindung eine gegensinnige Durchströmung in verschiedenen Bereichen des Tauchtropfkörpers erreicht werden. Dies ermöglicht insbesondere auch die Erzeugung bzw. die Verstärkung von Turbulenzen in der Umgebung des Tauchtropfkörpers. Bei gegensinniger Strömung in axial nebeneinanderliegenden Abschnitten des Wicklungskörpers wird zweckmäßig eine von der Längenmitte des Tauchtropfkörpers nach außen zu beiden Enden hin gerichtete Durchflutung angestrebt, und zwar mit Hilfe von Zuströmöffnungen im Bereich zwischen den divergierend durchströmten Körperabschnitten. In der Umgebung des Tauchtropfkörpers ergibt dies eine komplementäre, zirkulare Umströmung innerhalb des Abwassers.

In diesem Zusammenhang ist zum Stand der Technik ergänzend auf den aus der EP-A-0 014 453 bekannten Tauchtropfkörper hinzuweisen, der aus bündelweise zusammengefaßten, die Kanalwände bildenden Einzelelementen zusammengesetzt ist.

Es können sowohl Rohrbündel als auch Profilstücke zum Aufbau einer Gitterstruktur vorgesehen sein. Auch können die Einzelelemente zur Drehachse des Tauchtropfkörpers geneigt verlaufen. Alle Ausführungsformen nach dieser Druckschrift sind im Prinzip Rohr-Anordnungen, die nur aufwendig zu realisieren und im fertigen Zustand nicht sehr stabil sind.

In Weiterbildung der Erfindung können die Profilwellen in den bezüglich der Wickelachse radial übereinanderliegenden Wickellagen unterschiedliche Profilabmessungen und/oder unterschiedliche Kreuzungswinkel zur Wickelachse aufweisen. Dadurch kann die Verteilung der Axialströmung des Abwassers über den Querschnitt des Tauchtropfkörpers und die entsprechende Anschlußströmung in der Umgebung des Körpers beeinflußt und nach Maßgabe der jeweiligen Einsatzverhältnisse optimiert werden.

Ähnliches gilt für eine andere Weiterbildung der Erfindung, derzufolge mindestens zwei in Richtung der Wickelachse nebeneinanderliegende Wellplatten mit unterschiedlichen Kreuzungswinkeln zur Wickelachse vorgesehen sind. Diese Ausführung ermöglicht eine Beeinflussung des Verlaufes der Strömungsgeschwindigkeit in den Kanälen über die axiale Länge des Tauchtropfkörpers.

Ausführungsbeispiele der Erfindung werden nachstehend anhand der Zeichnungen erläutert. Hierin zeigt

Fig. 1 eine schematische Seitenansicht eines Tauchtropfkörpers,

Fig. 2 in größerem Maßstab einen Ausschnitt aus Fig. 1,

Fig. 3 Platten, aus denen der Tauchtropfkörper gewickelt wird, in Draufsicht,

Fig. 4 dasselbe wie Fig. 3 in einer anderen Ausführungsform,

Fig. 5 dasselbe wie Fig. 3 in einer dritten Ausführungsform und

Fig. 6 eine Seitenansicht von vier aufeinanderliegenden Platten, die zu einem Tauchtropfkörper aufgewickelt werden können.

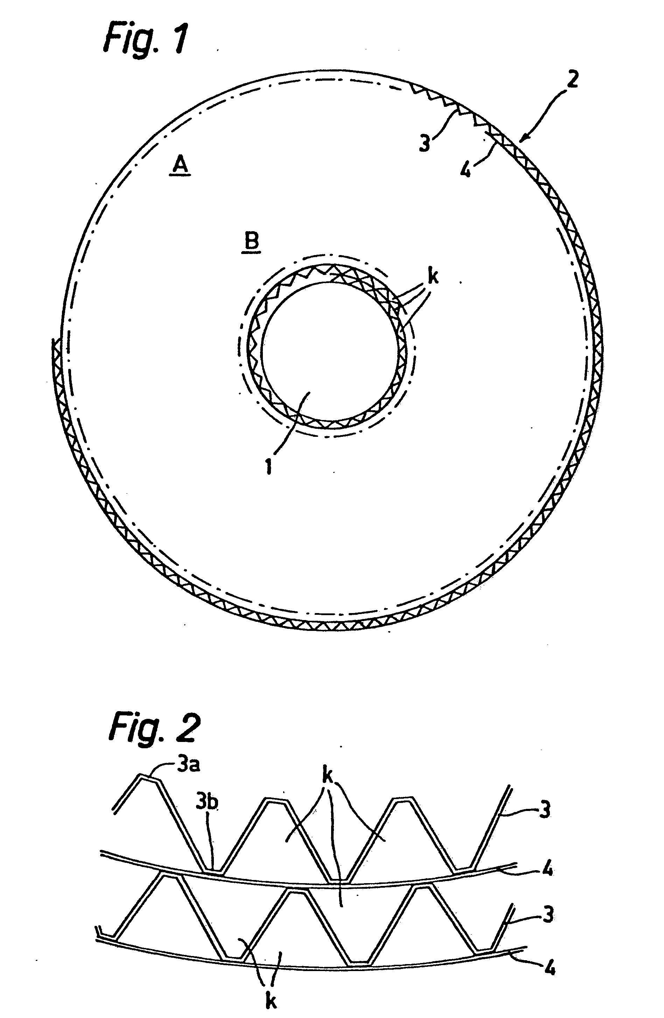

Der in Fig. 1 dargestellte Tauchtropfkörper besteht aus einem auf einer Welle 1 angeordneten Wickel 2, der aus zwei aufeinanderliegenden Kunststoffplatten 3 und 4 spiralförmig gewickelt ist. (Der Übersichtlichkeit halber sind in Fig. 1 nur die innersten und äußersten Windungen des Wickels 2 gezeichnet worden.) Die Platte 3 ist eine Wellplatte (siehe auch Fig. 2), während die Platte 4 eine flache Platte ist. Zwischen der flachen Platte 4 und den Wellen der Wellplatte 3 verlaufen durchgehende Kanäle durch den ganzen Tauchtropfkörper 2 hindurch.

Die Wellenscheitelabschnitte 3a und/oder die Wellentalabschnitte 3b der Wellplatte 3 werden während des Aufwickelns der beiden Platten an den Außenseiten mit den anliegenden Abschnitten der flachen Platte 4 verklebt oder verschweißt. Wenn sowohl die Wellenscheitel als auch die Wellentäler verklebt oder verschweißt werden, erhält man nach dem Aufwickeln einen stabilen, selbsttragenden Körper, der keine zusätzlichen Stütz- oder Trageinrichtungen benötigt.

Der Querschnitt der Wellen der Wellplatte 3 ist trapezförmig dargestellt. Das ist hinsichtlich der Stabilität die vorteilhafteste Form. Andere Formen sind jedoch selbstverständlich ebenfalls möglich; die Wellenform könnte bogenförmig (sinusförmig), dreieckig, sägezahnförmig, rechteckig usw. sein.

Die Größe des Querschnittes der Wellen bzw. der Kanäle k wird vorzugsweise möglichst klein gewählt, damit man in dem Tauchtropfkörper eine möglichst große innere Oberfläche für den Bewuchs mit dem biologischen Rasen erhält. Eine lichte Weite der Kanäle k von etwa 1 cm sollte jedoch in der Regel nicht oder nicht wesentlich unterschritten werden, weil die Kanäle sonst zu stark zuwachsen könnten und die Strömung darin zu stark behindert werden könnte.

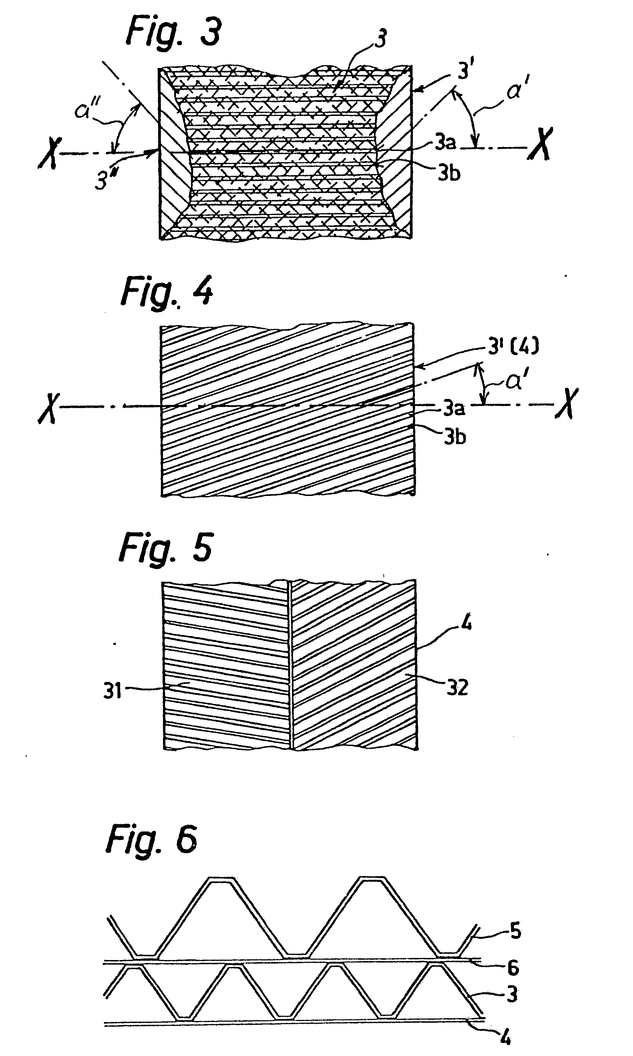

In Fig. 3 sind Wellplatten in abgewickelter Darstellung ausschnittsweise wiedergegeben, und zwar in Draufsicht eines Plattenpakets, das zu einem Tauchtropfkörper spiralförmig aufgewickelt werden kann. Obenliegend ist mit ausgezogenen Linien eine Wellplatte 3 angedeutet, deren Profilwellen parallel zur Wickelachse XX verlaufen. Darunterliegend, d. h. in aufgewickeltem Zustand bezüglich der Achse XX radial übereinanderliegend, sind Wellplatten 3' und 3'' strichliert angedeutet, deren Profilwellen bezüglich der Achse XX unter gegensinnig geöffneten Winkeln a' bzw. a'' verlaufen. Im fertigen Wickel verlaufen die Profilwellen bezüglich der Wickelachse schraubenartig mit großer Steigung. Die Winkel a' und a'' entsprechen dann den Kreuzungswinkeln der Profilwellen bzw. ihren Längstangenten mit der Wickelachse. Durch den teilweisen Verlauf der fertig geformten Profilwellen in Umfangsrichtung des Wickels ergibt sich die bereits in der Einleitung erläuterte Verstärkungs- und Versteifungswirkung, während die unterschiedlichen Kreuzungswinkel die ebenfalls bereits erläuterten Strömungseffekte in den Kanälen des Tauchtropfkörpers bzw. in dessen Umfeld ermöglichen. Die gezeigten Kanäle, wenn sie im Verlauf der Drehung des Tauchtropfkörpers in das Abwasser eintauchen, nehmen Luft tief in das Abwasser hinein mit, und beim Auftauchen heben sie das in ihnen enthaltene Wasser hoch über den Wasserspiegel. Dadurch wird im Abwasser eine starke Turbulenz erzeugt. Wenn man diese Turbulenz und die Strömungsgeschwindigkeit in den Kanälen kleiner halten will, kann man die Kanäle zur Dreh- bzw. Wickelachse XX mehr oder weniger stark geneigt anordnen.

Dadurch läßt sich auch die Intensität des Lufteintrags in das Abwasser in gewünschter Weise beeinflussen. Bei V-artig verlaufenden Kanälen ohne Öffnung im Scheitelbereich ergibt sich z. B. ein besonders tiefer Lufteintrag, wenn die offenen Schenkelenden bei nach oben gerichtetem V-Scheitel zuerst eintauchen. Der Luftinhalt des Kanals tritt dann im wesentlichen erst nach Durchlaufen der tiefsten Stelle der Umlaufbahn in das Abwasser aus.

Auch andere Abwandlungen sind möglich. Beispielsweise zeigt Fig. 5 zwei Wellplatten 31 und 32, die nebeneinander auf einer flachen Platte 4 liegen. Die Wellen der Platten 31 und 32 sind unterschiedlich geneigt. Wenn man die Platten 31, 32 und 4 zu einem Wickel aufwickelt, dann liegen die Platten 31 und 32 in Achsrichtung des Wickels nebeneinander, und ihre Wellen sind zur Wickelachse unterschiedlich geneigt.

Es kann auch vorteilhaft sein, wenn die Kanäle k in äußeren Windungen des Tauchtropfkörpers bzw. in einem radial äußeren Bereich A (Fig. 1), der sich beim Drehen des Tauchtropfkörpers schneller bewegt, anders bemessen und/oder anders geneigt sind als in inneren Windungen bzw. in einem radial inneren Bereich B, der langsamer ein- und auftaucht. Für die Herstellung eines solchen Tauchtropfkörpers legt man auf die flache Platte 4 in Längsrichtung bzw. Wickelrichtung nacheinander zwei Wellplattenteile mit entsprechend unterschiedlichen Wellen.

Der in Fig. 1 dargestellte Tauchtropfkörper ist aus einer Wellplatte 3 und einer Flachplatte 4 aufgebaut, also in Form einer zweigängigen Spirale. Es sind aber natürlich auch viergängige, sechsgängige Spiralen usw. denkbar. Eine viergängige Spirale erhält man, wenn man gemäß Fig. 6 zwei Flachplatten 4 und 6 und zwei Wellplatten 3 und 5 in alternierender Form aufeinanderlegt und zu einem Wickel aufwickelt.

Die Wellen der beiden Wellplatten 3 und 5 können unter sich verschiedene Größe und/oder verschiedene Neigung haben.

Die aufzuwickelnden Platten haben in der Regel über ihre Länge eine konstante Breite, so daß der Wickel zylindrisch ist. Die Breite der Platten bzw. die in Achsrichtung gemessene Breite des Wickels kann beispielsweise etwa 0,5 bis 0,7 m betragen. Die Breite der Platten könnte aber auch in Längsrichtung zu- oder abnehmen, womit die Stirnflächen konisch würden.

Der beschriebene Tauchtropfkörper kann aus nur zwei einfachen, billigen Teilen, nämlich einer Wellplatte und einer Flachplatte, die aufeinanderliegend zu einem Wickel aufgewickelt und dabei miteinander verklebt oder verschweißt werden, äußerst kostengünstig hergestellt werden. Er kann dabei jeden gewünschten Durchmesser erhalten. Der Tauchtropfkörper besitzt für einen gegebenen Rauminhalt eine maximale innere Oberfläche in seinen Kanälen. Die Kanäle werden beim Eintauchen mit Wasser gefüllt und beim Eintauchen entleert, wobei sie im Abwasser eine starke Turbulenz und Durchmischung erzeugen und das Abwasser belüften.

**Patentansprüche**

1. Tauchtropfkörper für die biologische Abwasserreinigung, mit mindestens einer spiralförmig aufgewickelten Wellplatte (3', 3'', 31, 32), wobei die Wellenprofil-Hohlräume als zur Wellenachse geneigt angeordnete Strömungskanäle für das Abwasser ausgebildet sind, dadurch gekennzeichnet, daß die Profilwellen der Wellplatte (3', 3'', 31, 32) zur Wickelachse (XX) unter einem vorgegebenen Kreuzungswinkel verlaufen, und daß die Profilwellen in den radial übereinander bzw. axial nebeneinanderliegenden Wickellagen (A, B) bzw. Wellplatten (31, 32) bezüglich der Wickelachse (XX) unter gegensinnig geöffneten Kreuzungswinkeln angeordnet sind.

2. Tauchtropfkörper nach Anspruch 1, dadurch gekennzeichnet, daß die Profilwellen in bezüglich der Wickelachse (XX) radial übereinanderliegenden Wickellagen (A, B) unterschiedliche Profilabmessungen und/oder unterschiedliche Kreuzungswinkel zur Wickelachse (XX) aufweisen.

3. Tauchtropfkörper nach Anspruch 1 oder 2, dadurch gekennzeichnet, daß mindestens zwei in Richtung der Winkelachse (XX) nebeneinanderliegende Wellplatten (31, 32) mit unterschiedlichen Kreuzungswinkeln zur Wickelachse (XX) vorgesehen sind.

4. Tauchtropfkörper nach einem oder mehreren der vorangehenden Ansprüche, dadurch gekennzeichnet, daß die Wellenprofil-Hohlräume auf wenigstens einer Oberflächenseite der Wellplatte durch eine im wesentlichen glattflächige Platte (4) abgeschlossen sind.

5. Tauchtropfkörper nach Anspruch 4, dadurch gekennzeichnet, daß die glattflächige Platte (4) zusammen mit der Wellplatte spiralförmig aufgewickelt ist.

6. Tauchtropfkörper nach einem oder mehreren der vorangehenden Ansprüche, dadurch gekennzeichnet, daß außer mindestens einer Wellplatte oder Wickellage mit bezüglich der Wickelachse (XX) unter einem Kreuzungswinkel verlaufenden Profilwellen wenigstens eine Wellplatte bzw. Wickellage (3) mit zur Wickelachse (XX) wenigstens annähernd parallelen Profilwellen vorgesehen sind.

7. Tauchtropfkörper nach einem oder mehreren der vorangehenden Ansprüche, dadurch gekennzeichnet, daß er aus wenigstens vier Platten (3, 4, 5, 6) gewickelt ist, von denen jeweils zwei Wellplatten (3, 5) und glattflächige Platten (4, 6) sind, die in Radialrichtung zur Wickelachse (XX) alternierend übereinanderliegen.

8. Tauchtropfkörper nach einem oder mehreren der vorangehenden Ansprüche, dadurch gekennzeichnet, daß die spiralförmig aufgewickelten Platten bzw. die Wickellagen miteinander verklebt oder verschweißt sind.

9. Tauchtropfkörper nach einem oder mehreren der vorangehenden Ansprüche, dadurch gekennzeichnet, daß das Wellenprofil in wenigstens einer Wickellage trapezförmig ausgebildet ist.

**Claims**

1. An immersion type percolating filter for biological waste water purification, comprising at least one spiral-wound corrugated panel (3', 3'', 31, 32), the corrugation profile cavities being formed as waste water flow ducts inclined to the corrugation axis, characterised in that the profiled corrugations of the corrugated panel (3', 3'', 31, 32) extend at a predetermined angle of intersection to the coiling axis (XX) and the profiled corrugations in the radially superposed or axially adjacent coil layers (A, B) or corrugated panels (31, 32) are disposed at counter-directionally open angles of intersection with respect to the coil axis (XX).

2. A filter according to claim 1, characterised in that the profiled corrugations in coil layers (A, B) which are radially superposed with respect to the coil axis (XX) have different profile dimensions and/or different angles of intersection relative to the coil axis (XX).

3. A filter according to claim 1 or 2, characterised in that at least two corrugated panels (31, 32) disposed adjacent one another in the direction of the coil axis (XX) are disposed at different angles of intersection relative to the coil axis (XX).

4. A filter according to one or more of the preceding claims, characterised in that the corrugation profile cavities are closed by a substantially smoothsurface panel (4) on at least one surface side of the corrugated panel.

5. A filter according to claim 4, characterised in that the smooth-surface panel (4) is wound in the form of a spiral together with the corrugated panel.

6. A filter according to one or more of the preceding claims, characterised in that at least one corrugated panel or coil layer (3) with profiled corrugations extending at least substantially parallel to the coil axis (XX) are provided in addition to at least one corrugated panel or coil layer having profiled corrugations extending at an angle of intersection with respect to the coil axis (XX).

7. A filter according to one or more of the preceding claims, characterised in that it is coiled from at least four panels (3, 4, 5, 6), of which two in each case are corrugated panels (3, 5) and two are smooth-surface panels (4, 6), which are alternately superposed in the radial direction relative to the coil axis (XX).

8. A filter according to one or more of the preceding claims, characterised in that the spiralwound panels or the coil layers are stuck or welded together.

9. A filter according to one or more of the preceding claims, characterised in that the corrugation profile is of trapezoidal construction in at least one coil layer.

## Revendications

1. Lit percolateur immergé pour l'épuration biologique des eaux résiduaires, comprenant au moins une plaque ondulée (3', 3'', 31, 32) enroulée en spirale, les creux du profilé ondulé étant constitués en canaux d'écoulement de l'eau résiduaire inclinés par rapport à l'axe des ondulations, caractérisé en ce que les ondulations du profilé de la plaque ondulée (3', 3'', 31, 32) s'étendent en faisant un angle de croisement donné à l'avance avec l'axe de l'enroulement (XX), et en ce que les ondulations du profilé dans les couches d'enroulement (A, B) ou dans les plaques ondulées (31, 32) superposées radialement ou disposées axialement les unes à côté des autres sont disposées en faisant avec l'axe de l'enroulement (XX) des angles de croisement ouverts en sens opposés.

2. Lit percolateur immergé suivant la revendication 1, caractérisé en ce que les ondulations du profilé, dans les couches d'enroulement (A, B) superposées radialement par rapport à l'axe de l'enroulement (XX) présentent des dimensions de profilés différentes et/ou des angles de croisement différents avec l'axe de l'enroulement (XX).

3. Lit percolateur immergé suivant la revendication 1 ou 2, caractérisé en ce qu'il est prévu au moins deux plaques ondulées (31, 32) disposées l'une à côté de l'autre dans la direction de l'axe de l'enroulement (XX), et faisant avec l'axe de l'enroulement (XX) des angles de croisement différents.

4. Lit percolateur immergé suivant l'lune ou plusieurs des revendications précédentes, caractérisé en ce que les creux du profilé ondulé sont fermés pour au moins un côté de la surface de la plaque ondulée par une plaque (4) à surface lisse.

5. Lit percolateur immergé suivant la revendication 4, caractérisé en ce que la plaque (4) à surface lisse est enroulée en spirale, ensemble avec la plaque ondulée.

6. Lit percolateur immergé suivant l'une ou plusieurs des revendications précédentes, caractérisé en ce qu'il est prévu, en plus d'au moins une plaque ondulée ou d'une couche enroulée, ayant des ondulations du profil s'étendant en faisant un angle de croisement avec l'axe de l'enroulement (XX), au moins une plaque ondulée ou une couche enroulée (3) ayant des ondulations du profil, au moins sensiblement parallèles à l'axe de l'enroulement (XX).

7. Lit percolateur immergé suivant l'une ou plusieurs des revendications précédentes, caractérisé en ce qu'il est constitué en enroulant au moins quatre plaques (3, 4, 5, 6) dont deux plaques ondulées (3, 5) et deux plaques (4, 6) à surface lisse qui sont superposées alternativement dans la direction radiale par rapport à l'axe de l'enroulement (XX).

8. Lit percolateur suivant l'une ou plusieurs des revendications précédentes, caractérisé en ce que les plaques enroulées en spirale ou les couches de l'enroulement sont collées ou sont soudées les unes avec les autres.

9. Lit percolateur immergé suivant l'une ou plusieurs des revendications précédentes, caractérisé en ce que le profilé à ondulations comprend au moins une couche enroulée de forme trapézoïdale.

*Fig. 1*

A

B

k

1

3

4

2

*Fig. 2*

3a

3b

k

3

4

3

4

k

*Fig. 3*

*Fig. 4*

*Fig. 5*

*Fig. 6*